# EUROPEAN PATENT APPLICATION

(11) **EP 4 671 097 A1**
(43) Date of publication of application: **31.12.2025**
(21) Application number: 24382696.3
(22) Date of filing: 28.06.2024
(51) Int. Cl.: B62J 1/08, B62K 19/36, G01D 5/40

(54) **TELESCOPIC SEATPOST SYSTEM AND METHOD FOR OPERATING SAID SYSTEM**

(71) Applicant: ORBEA, S. COOP., 48269 Mallabia (BIZKAIA) (ES)
(72) Inventor: LIZARRALDE BILBAO, Markel, 48200 Durango (Bizkaia) (ES); AUZMENDI ARKARAZO, Beñat, 20740 Zestos (Gipuzkoa) (ES)
(74) Representative: Cueto, Sénida

(57) **Abstract**

The invention discloses a telescopic seatpost system comprising means to lock the position of the seat (S) in predefined positions in response to the pulsation of a button by the cyclist, without the need for the cyclist to keep said button (41) pushed during the time the telescopic mechanism (2) supporting the seat (S) is compressing or extending.

## Description

### Object of the invention

The present invention belongs to the field of bicycles, and more particularly to systems for actuating the telescopic seatpost of a bicycle.

A first aspect of the present invention is directed to an improved telescopic seatpost system with respect to the state of the art.

A second aspect of the present invention is directed to a bicycle provided with said telescopic seatpost system.

A third aspect of the present invention is directed to a method for operating said telescopic seatpost system.

### State of the art

Many bicycles in the market comprise a telescopic seatpost, which is an element mounted to the vertical tube of the bicycle frame designed to enable a vertical displacement of the seat when the cyclist requires.

A telescopic seatpost is mainly formed by two telescopic tubes, one of which is fixed to the vertical tube of the frame, and the other to the base of the seat. Thus, by means of an actuation mechanism disclosed further down in the present document, one of the tubes is extended or retracted with respect to the other, which in turn causes the seat to elevate or descend.

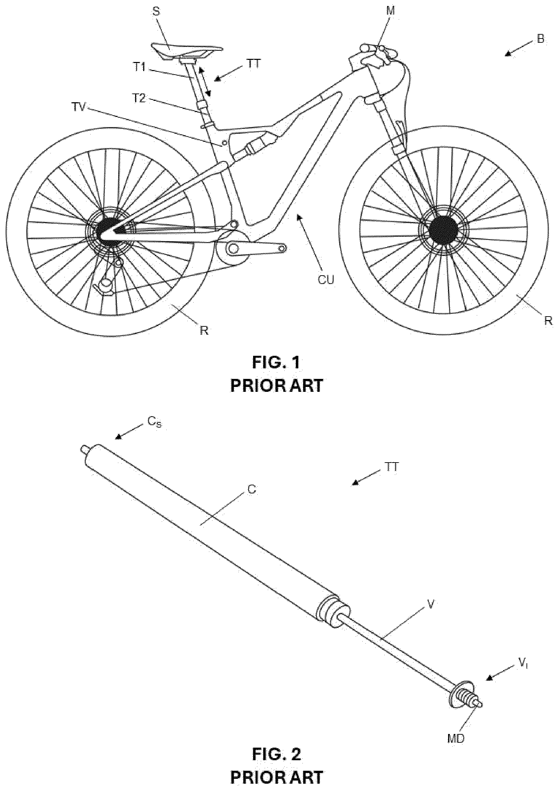

Fig. 1 shows an exemplary bicycle (B) formed mainly by a frame (CU), wheels (R) and handlebar (M), and further comprising a telescopic seatpost (TT) to enable the displacement of the seat (S). Fig. 2 shows the internal mechanism of said telescopic seatpost (TT).

As shown in Fig. 2, the telescopic seatpost (TT) comprises a rod (V) configured for longitudinal displacement along the interior of a cylinder (C). The lower end (V_{I}) of the rod (V) is fixed to the upper end of the vertical tube (TV) of the frame (CU), while the upper end (Cs) of the cylinder (C) is fixed to the base of the seat (S). Fig. 1 shows that the cylinder (C) is housed inside a first tube (T1) and the rod (V) is housed withing a second tube (T2), where the first tube (T1) is telescopically housed withing the second tube (T2). The first and second tubes (T1, T2) provide the system with a better aesthetic appearance, in addition to protecting the rod (V) and the cylinder (C) against debris from the exterior.

Although not shown in Fig. 2, the upper end of the rod (V) is shaped as a piston or plunger, such that the longitudinal displacement of said rod (V) along said cylinder (C) causes the compression or expansion of a gas housed within an internal chamber of the cylinder (C). An unlocking means (MD) shaped as a pushbutton provided at the lower end of the rod (V) controls the state of an internal valve (not shown in the figures) to enable or disable the relative displacement of the rod (V) with respect to the cylinder (C).

This mechanism entails that, when the telescopic seatpost (TT) is installed in the bicycle (B) and the unlocking means (MD) is not pushed, the relative displacement of the rod (V) with respect to the cylinder (C) is locked. The telescopic seatpost (TT) keeps the seat (S) at the position it is, that is, it cannot be extended or retracted. When the cyclist pushes the unlocking means (MD), the relative displacement of the rod (V) with respect to the cylinder (C) is enabled. In this case, in the absence of any additional external force, the pressure of the gas housed within the cylinder chamber causes the extension of the telescopic seatpost (TT), causing the seat (S) to elevate. When, on the contrary, the cyclist applies in the opposite direction a force greater than the force exerted by the gas, for example, by pushing the seat (S) downwards, the telescopic seatpos (TT) is retracted and, consequently, the seat (S) descends. Once the seat (S) is at the desired height, the cyclist can fix the seat (S) at the desired position just by releasing the unlocking means (MD).

The actuation of the unlocking means (MD) can be carried out in a number of known manners.

There exist mechanical actuation systems based on the provision of an actuation cable connected to a lever at the handlebar. When the cyclist actuates the lever, the traction of the cable causes the unlocking means to be actuated.

Alternatively, there exist electric alternatives where a small electric motor actuates the unlocking means. This electric motor can be cabled to the lever at the bicycle handlebar, or else wireless means can be employed for connecting the lever at the handlebar (which in this case could be a button) with the electric motor. In both cases, a battery provides electrical supply to the motor.

A drawback of this type of systems, whether electric or mechanical, is that the cyclist needs to maintain lever or button for unlocking the telescopic seatpost pushed throughout the whole path of the seat. In certain cases, e.g. during difficult downward slopes, this can be dangerous because the cyclist has to release a finger from the handlebar to actuate the lever in question during the time needed for the position of the seat to be adjusted.

In short, there exist in this field the need for systems for adjusting the position of the seat which do not require the cyclist to keep the unlocking means pushed all the time.

### Brief disclosure of the invention

The inventors of the present invention have solved the aforementioned drawbacks by means of a telescopic seatpost control system designed for the cyclist to carry out only a single pulsation to unlock the displacement of the seat. That is, once the cyclist has pushed the corresponding button of the controller, the system of the invention keeps the telescopic mechanism supporting the seat unlocked until said seat arrives at a predetermined position. For example, the predetermined position could be the máximum compression position of the telescopic mechanism. The cyclist can thereby grab the handlebar with the whole hand during the time it takes the seat to move to the predetermined position.

This new operation mode disclosed is compatible with the conventional operation mode disclosed earlier. In fact, both operation modes can be implemented in the same seatpost system, such that the cyclist can choose which operation mode he/she prefers in each case.

Now, first the telescopic seatpost system and then the method for operating said system are disclosed.

### Telescopic seatpost system

A first aspect of the present invention is directed to a telescopic seatpost system mainy comprising the following elements: a telescopic mechanism, an actuation block; and a controller.

Next, each of these elements is disclosed in greater detail.
a) Telescopic mechanism
   The telescopic mechanism comprises an inner rod provided with a plunger housed in a sliding manner in a longitudinal direction within an outer tube and a valve whose closure locks the displacement capacity of the inner rod with respect to the outer tube. The inner rod has a lower end configured to be fixed to the frame of a bicycle and the outer tube has an upper end configured to be fixed to the seat of the bicycle.
   The telescopic mechanism further comprises an unlocking pushbutton connected to the valve, where said unlocking pushbutton is configured to open the valve when pushed and to keep it closed otherwise.
b) Actuation block
   The actuation block is fixed to the lower end of the inner rod. The actuation block comprises an electrical actuator configured to selectively push the unlocking pushbutton, the electric actuator alternating between a predetermined locked position where it does not push the unlocking pushbutton and an unlocking position where it pushes the unlocking pushbutton.
c) Controller
   The controller is configured to be provided at the bicycle handlebar and it is electrically connected to the actuation block. Thus, when a button of said controller is pushed, the electric actuator alternates between the locking position and the unlocking position.

Until now, a configuration corresponding to a conventional telescopic seatpost system is disclosed. As mentioned earlier, in a conventional system, the cyclist needs to keep the pushbutton of the controller pushed the whole time needed for the seat to move to the desired position.

The present invention, on the contrary, provides means for keeping the telescopic mechanism unlocked automatically when the cyclist stops pushing said button of the controller. These means maintain the mechanism unlocked until the seat arrives at a predetermined position.

These means comprise mainly a position sensor and electronic control means.
- Position sensor
   The position sensor is configured to determine a position of the outer tube with respect to the inner rod. In principle, the position sensor may have any configuration provided it can determine the longitudinal position of the rod with respect to the tube. For example, a magnetic sensor, capacitive sensor, inductive sensor, photoelectric sensor, ultrasound sensor, infrared sensor, limit switch sensor, etc. However, in a particularly preferred embodiment of the invention, an infrared sensor is employed.
   The position sensor could be provided in any suitable position, although it is preferably comprised in the actuation block. Even more preferably, the position sensor comprises an infrared emitter configured to emit an infrared beam in the longitudinal direction along a space between the outer tube and the inner rod that impacts the plunger of the inner rod. In this case, a housing of the actuation block preferably has an upper hole through which the infrared beam passes.
- Electronic control means

The electronic control means are connected to the button of the controller, to the position sensor and to the electric actuator. The connection between these elements can be of any type, both cabled and wireless (for example, through Bluetooth, Bluetooth Low Energy (BLE), or the like). On the other hand, the electronic control means could be of any type provided they have the connectivity and the processing capacity enough to carry out the tasks disclosed in the present document. Merely as an example, a microprocessor, a microcontroller, a DSP (Digital Signal Processor), an ASIC (Application Specific Integrated Circuit), an FPGA (Field Programmable Gate Array), or the like could be used.

The electronic control means could be provided in any position depending on the needs of each particular application. For example, the electronic control means could be provided at the controller when the system is implemented in a conventional bicycle. Alternatively, the electronic control means could be integrated into a main control block intended to control the pedal assist motor when the system of the invention is implemented in an electric bicycle.

In any case, in the present invention these electronic control means are configured to, in response to the pulsation of the button of the controller by the cyclist, carry out automatically the following actions:
1. Command the electric actuator to move to the unlocking position.
2. Keep the electric actuator in the unlocking position until the position sensor detects that the inner rod has reached to a predefined position with respect to the outer tube.
3. At this point, command the actuator to return to the locking position.

The predefined position may in principle be any position useful for the cyclist. For example, interesting predefined positions in this context are the maximum compression and maximum extension positions of the telescopic mechanism. Thus, at the beginning of a downward slope the cyclist can perform a fast pulsation of the button of the controller and thereby cause the seat to descend all the way down without the need to maintain a hand occupied during the whole time it takes for the seat to arrive at the low position. Similarly, once the downwards slope is over, an individual pulsation of the button of the controller could cause the seat to return to the uppermost position.

In another preferred embodiment of the invention, several additional predefined positions between the maximum compression position and the maximum extension position could be employed. For example, it would also be possible to program one or more intermediate predefined positions between the maximum extension and compression positions.

In other preferred embodiments, the predefined position or positions could be different depending on whether the seat is in an ascending process or a descending process. Thus, for example, when the cyclist pushes the button of the controller and then pushes the seat downwards from the current position, irrespective of which position this is, the predefined position could be the maximum compression position. However, if the cyclist pushes the button of the controller and then allows the seat to ascend, several intermediate positions could be programmed. In this case, the seat, in its ascending trajectory, would stop at the fist intermediate position it encounters. In case this position was too low for the cyclist at that moment, one subsequent pulsation would cause the seat to ascend until the immediately higher intermediate position, and so on until arriving the position desired by the cyclist.

The electric actuator could be implemented in different manners provided it has all the necessary means to push the unlocking pushbutton of the telescopic mechanism upon receiving the corresponding signal from the electronic control means. In particular, according to a particularly preferred embodiment of the invention, the electric actuator comprises:
- An electric motor comprising an axle. Naturally, this electric motor would have to be connected to a supply battery. The battery could be a dedicated battery provided at any suitable position or, in case of an electric bicycle, the supply battery of the pedal assist motor of said bicycle could be also used for this purpose.
- A cam connected to the axle of the electric motor. The cam comprises a contact surface with the unlocking means that is configured such that: in a first rotational position of the motor, the contact surface pushes the unlocking means; and in a second rotational position of the motor, the contact surface does not push the unlocking means.

The motor could be provided with the axle in a direction perpendicular to the longitudinal axis of the telescopic mechanism. However, in a particularly preferred embodiment of the invention, the axle of the electric motor is parallel to a longitudinal axis of the inner rod. In this case, the contact surface of the cam is shaped as a helical ramp. Thus, in the first rotational position of the motor, the unlocking pushbutton of the telescopic mechanism faces a low section of the ramp. In this situation, the unlocking pushbutton is not pushed, and therefore the telescopic mechanism is locked: the seat cannot move. However, as the motor rotates in a predetermined direction, the height of the ramp increases and, upon arriving at the second rotational position, an elevated section of the ramp pushes the unlocking pushbutton. In this situation, the telescopic mechanism is unlocked and the seat can move. Just after the elevated section of the ramp, there is a descending shoulder returning rapidly to the height of the low section. Thus, when the motor rotates a small angle past the second rotational position, the unlocking pushbutton ceases to be pushed almost instantly. A great precision is thus achieved with respect to the pass from unlocked mechanism to locked mechanism and, therefore, also with respect to the predetermined position of the seat.

The system disclosed could be installed in any conventional bicycle, that is, a non-electric bicycle, to assist in controlling the telescopic seatpost. Alternatively, the system of the invention could be installed in an electric bicycle.

### Electric bicycle comprising the telescopic seatpost system

A second aspect of the present invention is directed to an electric bicycle comprising the telescopic seatpost system disclosed above, where the actuation block is electrically connected to the supply battery of the pedal assist motor.

### Method for operating the telescopic seatpost system

A third aspect of the present invention is directed to a method for operating the telescopic seatpost system disclosed in the previous paragraphs. This method mainly comprises the following steps:
- The electronic control means monitor the position of the button.
- Upon detecting the pulsation of the button, the electronic control means command the electric actuator to pass to the unlocking position.
- The electronic control means automatically maintain the electric actuator in the unlocking position until the position sensor detects that the inner rod has arrived at a predefined position with respect to the outer tube.
- At this point, the electronic control means command the electric actuator to return to the locking position.

Preferably, the predefined position is a maximum compression or maximum extension of the telescopic mechanism. The system may also comprise a plurality of additional predefined positions between the maximum compression position and the maximum extension position.

As mentioned earlier, the predefined position or positions may be different depending on whether the seat is in an ascending process or a descending process. Thus, when e.g. the cyclist pushes the button of the controller and, thereafter, pushes the seat downwards from the current position, irrespective of the current position, the predefined position may be the maximum compression position. However, if the cyclist pushes the button of the controller and, then, allows the seat to ascend, then several predefined intermediate positions can be programmed. In this case the seat, during the ascending trajectory, would stop at the first intermediate position. In case this position was too low for the cyclist at that moment, a subsequent pulsation would allow the seat to ascend until the intermediate position immediately above, and so on until reaching the position desired by the cyclist.

### Brief description of the figures

The details of the invention are shown in the accompanying figures, which are not to be taken as limiting the scope of the invention.
Fig. 1 shows a schematic view of a conventional bicycle having a telescopic seatpost.
Fig. 2 shows a conventional telescopic seatpost mechanism.
Fig. 3 shows a telescopic seatpost mechanism coupled to an actuation block according to the invention.
Fig. 4 shows a schematic view of an actuation block according to the invention.
Fig. 5 shows another schematic view of an actuation block according to the invention.
Figs. 6a-6c shows an upper view of the cam in different positions during operation of the system of the present invention.

### Detailed description of the invention

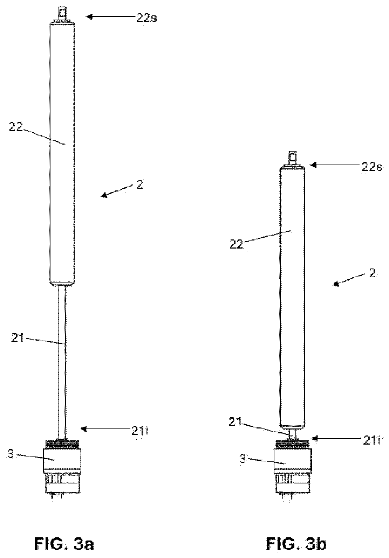

An example of telescopic seatpost system according to the invention is disclosed with reference to Figs. 3-5.

Figs. 3a and 3b show a telescopic mechanism (2) coupled to an actuation block (3) respectively in an extended position and in a retracted position.

The telescopic mechanism (2) comprises an inner rod (21) that slides along a longitudinal direction within an outer tube (22). The inner rod (21) has a lower end (21i) configured to be coupled to the frame (CU) of a bicycle (B), while the outer tube (22) has an upper end (22s) configured to coupled to the base of the seat (S) of the bicycle (B).

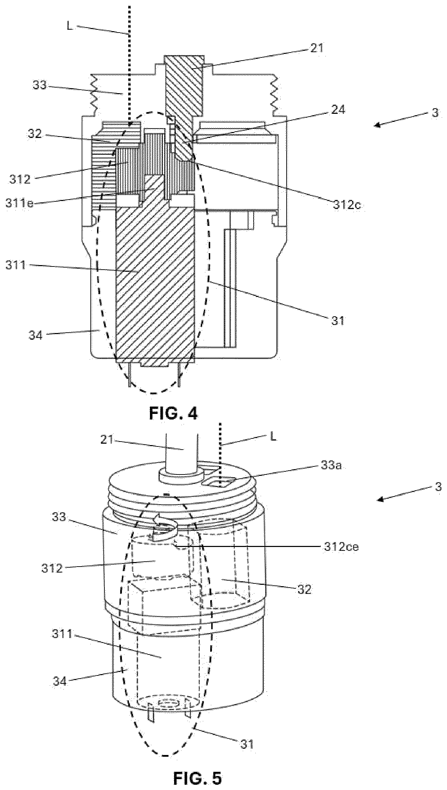

The rod (21) has, at its upper end, a plunger (not shown in the figures) preventing impeding a gas housed inside the outer tube (22) to pass. A valve (not shown in the figures) selectively allows the gas to pass from one side of the outer tube (22) to the other. Thus, when the valve is closed, the telescopic mechanism (2) is locked, that is, the rod (21) cannot be displaced with respect to the tube (22) and, therefore, the position of the seat (S) is locked. However, when the valve is opened, the rod (21) can move with respect to the tube (22), and therefore it is possible to move the seat (S) upwards or downwards. The actuation of the valve takes place by means of a pushbutton (24) placed at the lower end (21i) of the rod (21), as shown in Fig. 4. The actuation block (3) is coupled to the lower end (21i) of the rod (21) to actuate the pushbutton (24) depending on the needs of the cyclist.

As mentioned earlier, the telescopic mechanism (2) disclosed until this point has an essentially known configuration. According to the invention, however, the configuration of the actuation block (3) is substantially different from this conventional configuration.

The actuation block (3) of this example of the invention has an electric actuator (31) comprising an electric gearmotor (311) having an axle (311e) connected to a cam (312). The electric gearmotor (311) is provided at the actuation block (3) such that the axle (311e) is oriented in a longitudinal direction. Thus, when the gearmotor (311) is actuated, the cam (312) rotates around the longitudinal axis.

The cam (312) has a contact surface (312c) shaped essentially as a helical ramp whose height progressively increases from a first lower height to a second higher height located about 350-359° forward. From that point, the contact surface (312c) has a sharp shoulder (312ce) that descends to the first lower height again. The cam (312) is provided at a position such that the pushbutton (24) of the lower end of the rod (21) is placed immediately above a point of the circular trajectory of the contact surface (312c) in the longitudinal direction. Further, the distance between the end of the pushbutton (24) and the contact surface (312c) is such that, when the part of the contact surface (312c) below the pushbutton (24) has the first lower height, said pushbutton (24) is not pushed. However, when the cam (312) is rotated such that the part of the contact surface (312c) below the pushbutton (24) has the second upper height, the contact surface (312c) itself pushes the pushbutton (24), thus unlocking the longitudinal movement of the rod (21) with respect to the outer tube (22) of the telescopic mechanism (2).

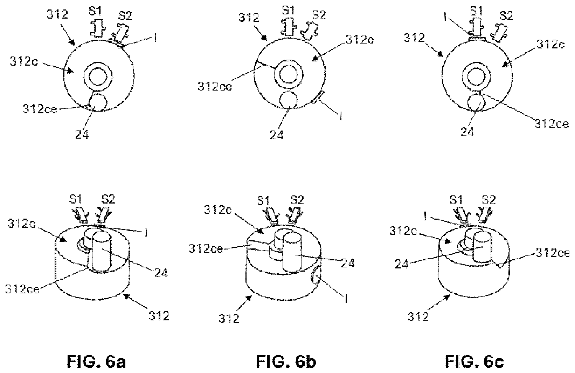

To determine the position of the cam (312) at each moment a number of systems may be used. As shown in Figs. 6a-7c, in this specific example a magnet (I) is provided at a radially outer surface of the cam (312) as well as two magnetic sensors (S1, S2) provided at respective positions at the plane of displacement of the magnet (I) but slightly radially separated from its trajectory. Thus, when the cam (312) is in the position shown in Fig. 6a, the magnet (I) is opposite the second magnetic sensor (S2), such that it is detected by said sensor (S2). In this example, the pushbutton (24) at this position is placed over the first lower height of the helical surface (312c), and therefore it is not pushed: the telescopic mechanism (2) is locked. When the cyclist pushes the button of the controller to change the position of the seat (S), the gearmotor (311) is actuated and the cam (312) starts to rotate. The magnet (I) moves in the clockwise direction, such that it is no longer opposite the second magnetic sensor (S2). At this position, which is shown in Fig. 6b, none of the magnetic sensors (S1, S2) is opposite the magnet (I), and the magnet (I) is therefore not detected. The gearmotor (311) continues rotating the cam (312) until the magnet (I) is opposite the first magnetic sensor (S1), as shown in Fig. 6c. At this point, when the first magnetic sensor (S1) detects the presence of the magnet (I), the gearmotor (311) is commanded to stop. As shown, at this position the pushbutton (24) is located over the second upper height of the helical surface (312c), and therefore it is pushed: the telescopic mechanism (2) is unlocked. The cam (312) is maintained at this position until the seat (S) reaches a desired position, moment at which the gearmotor (311) is again commanded to rotate. As shown, a small rotation angle caused the pushbutton (24) to move past the shoulder (312ce), such that it is almost instantaneously no longer pushed, arriving again at the position of Fig. 6a where the second sensor (S2) detects the magnet (I).

The actuation block (3) of this example further has a position sensor (32) configured to determine the position of the outer tube (22) with respect to the inner rod (21). This position sensor (32) is an infrared emitter emitting an IR beam (L) in the longitudinal direction along the space between the outer tube (22) and the inner rod (21), this IR beam (L) impinging on the plunger (not shown in the figures) provided at the upper end of said rod (21). This position sensor (32) detects the relative position of the inner rod (21) with respect to the outer tube (22) at all times.

These elements, that is, the electric actuator (31) formed by the gearmotor (311) and the cam (312), and the position sensor (32), are provided inside a housing that, in this example, is formed by two parts (33, 34), specifically an upper part (33) and a lower part (34) configured to be connected one to the other. As shown in Fig. 5, the upper part (33) has a hole (33a) through which the IR beam (L) emitted by the position sensor (32) passes.

Electronic control means (42) are electrically connected to the gearmotor (311) and to the position sensor (32), as well as to a button provided in a controller placed in a comfortable position for the cyclist. When the cyclist desires to modify the position of the seat (S), he/she only needs to provide a single pulsation onto the button of the controller. When the electronic control means (42) detect said pulsation, they command the activation of the gearmotor (311) just the angle necessary for the second upper height of the contact surface (312c) to pulse the pushbutton (24), which in turn will unlock the telescopic mechanism (2), as disclosed earlier. The electronic control means (42) command the gearmotor (311) to maintain that position of the cam (312) until the distance measured by the position sensor (32) reaches a predetermined value.

As mentioned earlier in this document, the predetermined value can be chosen in a number of manners depending on the needs of the cyclist. Preferably, this predetermined value may correspond to the maximum compression position or to the maximum extension position. Alternatively or complementary, one or more predetermined values corresponding to intermediate positions between the maximum compression position and the maximum extension position can be programmed. It would also be possible for the predetermined values to depend on whether the telescopic mechanism (2) is being extended or compressed, on the initial position of the seat (S) when the pulsation takes place, or on other programmable external variables. Next, a number of possibilities are mentioned in a nonlimiting manner.

The predetermined position may depend, for example, on the distance measured by the position sensor (32) when the pulsation takes place. For example, if the position sensor (32) detects that the telescopic mechanism (2) is in the extended position when the button is pushed and that it starts to be compressed, the electronic control means (42) may keep the pushbutton (24) actuated until the maximum compression position is reached. This could be the case when the cyclist is starting a downwards slope starting from the extended position of the telescopic mechanism (2).

If the position sensor (32) detects that the telescopic mechanism (2) is in a partially compressed position and, once unlocked, that the telescopic mechanism (2) starts to be compressed, the electronic control means (42) may keep the pushbutton (24) activated until the maximum compression position is reached. This case may correspond to the beginning of a downward slope starting from an intermediate position of the seat (S).

If the position sensor (32) detects that the telescopic mechanism (2) is in a partially compressed position and that, once unlocked, the telescopic mechanism (2) starts to extend, the electronic control means (42) may maintain the pushbutton (24) activated also until arriving at the maximum extension position. This case may correspond to the end of a downwards slope starting from an intermediate position of the seat (S).

If the position sensor (32) detects that the telescopic mechanism (2) is in a completely compressed position, the electronic control means (42) may maintain the pushbutton (24) activated also until arriving at the maximum extension position. This case could correspond to the end of a downward slope starting from the low position of the seat (S).

In any of these cases, although specially in those cases where the telescopic mechanism (2) is detected to be extending, intermediate positions could be programmed between the maximum compression position and the maximum extension position. Thus, when the cyclist permits the ascension of the seat (S), it would adopt successive positions in response to consecutive pulsations of the button (41).

On the other hand, the controller could be installed in any position of the bicycle (B), normally somewhere at the handlebar (M), provided it is comfortable for the cyclist. Also, the electronic control means (42), as well as the battery that necessarily should provide electric supply to the electric motor (31), the sensor (32) and the electronic control means (42), could be provided at any suitable position.

However, since an electric bicycle (B) has a battery, according to the invention advantage can be taken of this battery to supply the different elements of the telescopic seatpost system that so require, thereby eliminating the need to use a dedicated battery. Thus, in this configuration, the battery of the bicycle (B) supplying the pedal assist motor, normally provided at a central area of the frame (CU), is connected to the motor-reducer (311) and to the position sensor (32). The electronic control means (42) may be supplied from the same battery.

## Claims

1. Telescopic seatpost system comprising:
a) a telescopic mechanism (2) comprising a rod (21) having a plunger housed in a sliding manner along a longitudinal direction inside an outer tube (22) and a valve that, when closed, locks the sliding capacity of the rod (21) with respect to the outer tube (22),
where the rod (21) has a lower end (21i) configured for connection to the frame (CU) of a bicycle (B) and the outer tube (22) has an upper end (22s) configured for connection to the seat (S) of the bicycle (B),
and where said telescopic mechanism (2) further comprises an unlocking pushbutton (24) connected to the valve, said unlocking pushbutton (24) being configured to open the valve when pushed and to maintain it closed otherwise;
b) an actuation block (3) fixed to the lower end (21i) of the rod (21), said actuation block (3) comprising an electric actuator (31) configured to selectively push the unlocking pushbutton (24), the electric actuator (31) alternating between a predetermined locking position (PB) where it does not push the unlocking pushbutton (24) and an unlocking position (PD) where it pushes the unlocking pushbutton (24); and
c) a controller of the telescopic mechanism (2) configured to be provided at the handlebar (M) of the bicycle (B) and electrically connected with the actuation block (3) such that, when a button of said controller is pushed, the electric actuator (31) alternates between the locking position (PB) and the unlocking position (PD),
**characterized by** further comprising:
- a position sensor (32) configured to determine a position of the outer tube (22) with respect to the rod (21); and
- electronic control means (42) connected to the button of the controller, to the position sensor (32) and to the electric actuator (31), where said electric control means (42) are configured to, in response to the pulsation of the button, automatically carry out the following actions:
- command the electric actuator (31) to move to the unlocking position (PD);
- maintain the electric actuator (31) in the unlocking position (PD) until the position sensor (32) detects that the rod (21) has arrived at a predefined position with respect to the outer tube (22); and
- at this point, command the electric actuator (31) to return to the locking position (PB).

2. System (1) according to claim 1, where the predefined position is a maximum compression position or a maximum extension position of the telescopic mechanism (2).

3. System (1) according to claim 2, comprising a plurality of additional predefined positions between the maximum compression position and the maximum extension position of the telescopic mechanism (2).

4. System according to any of the previous claims, where the electric actuator (31) comprises:
- an electric motor (311) comprising an axle (311e); and
- a cam (312) connected to the axle (311e) of the electric motor (311), the cam (312) comprising a contact surface (312c) with the unlocking pushbutton (24) configured such that: in a first rotational position of the motor (311), the contact surface (312c) pushes the unlocking pushbutton (24); and in a second rotational position of the motor (311), the contact surface (312c) does not push the locking pushbutton (24).

5. System (1) according to claim 4, where the axle (311e) of the electric motor (311) is parallel to a longitudinal axis of the rod (21), where the contact surface (312c) of the cam (312) is shaped as a helical ramp.

6. System (1) according to any of the previous claims, where the position sensor (32) is comprised in the actuation block (3).

7. System (1) according to claim 6, where the position sensor (32) comprises an infrared emitter configured to emit an infrared beam (L) in the longitudinal direction along a space between the outer tube (22) and the rod (21) that impinges onto the plunger of the rod (21).

8. System according to claim 7, where the actuation block (3) comprises a housing (33, 34) having an upper hole (33a) through which the infrared beam (L) passes.

9. Electric bicycle comprising a system according to any of the previous claims, where the actuation block (3) is electrically connected to an electric supply battery of the pedal assist motor.

10. Method for operating a telescopic seatpost system (1) according to any of claims 1-8, **characterized by** comprising the following steps
- the electronic control means (42) monitor the position of the button;
- when pulsation of the button is detected, the electronic control means (42) command the electric actuator (31) to move to the unlocking position (PD);
- the electronic control means (42) automatically maintain the electric actuator (31) in the unlocking position (PD) until the position sensor (32) detects that the rod (21) has arrived at a predefined position with respect to the outer tube (22); and
- at this moment, the electronic control means (42) command the electric actuator (31) to return to the locking position (PB).

11. Method according to claim 10, where the predefined position is a maximum compression position or a maximum extension position of the telescopic mechanism (2).

12. Method according to claim 11, comprising a plurality of additional predefined positions between the maximum compression position and the maximum extension position of the telescopic mechanism (2).

## Amended claims

### Amended claims in accordance with Rule 137(2) EPC.

1. Telescopic seatpost system comprising:
a) a telescopic mechanism (2) comprising a rod (21) having a plunger housed in a sliding manner along a longitudinal direction inside an outer tube (22) and a valve that, when closed, locks the sliding capacity of the rod (21) with respect to the outer tube (22),
where the rod (21) has a lower end (21i) configured for connection to the frame (CU) of a bicycle (B) and the outer tube (22) has an upper end (22s) configured for connection to the seat (S) of the bicycle (B),
and where said telescopic mechanism (2) further comprises an unlocking pushbutton (24) connected to the valve, said unlocking pushbutton (24) being configured to open the valve when pushed and to maintain it closed otherwise;
b) an actuation block (3) fixed to the lower end (21i) of the rod (21), said actuation block (3) comprising an electric actuator (31) configured to selectively push the unlocking pushbutton (24), the electric actuator (31) alternating between a predetermined locking position (PB) where it does not push the unlocking pushbutton (24) and an unlocking position (PD) where it pushes the unlocking pushbutton (24); and
c) a controller of the telescopic mechanism (2) configured to be provided at the handlebar (M) of the bicycle (B) and electrically connected with the actuation block (3) such that, when a button of said controller is pushed, the electric actuator (31) alternates between the locking position (PB) and the unlocking position (PD),
further comprising:
- a position sensor (32) configured to determine a position of the outer tube (22) with respect to the rod (21); and
- electronic control means (42) connected to the button of the controller, to the position sensor (32) and to the electric actuator (31), where said electric control means (42) are configured to, in response to the pulsation of the button, automatically carry out the following actions:
- command the electric actuator (31) to move to the unlocking position (PD);
- maintain the electric actuator (31) in the unlocking position (PD) until the position sensor (32) detects that the rod (21) has arrived at a predefined position with respect to the outer tube (22); and
- at this point, command the electric actuator (31) to return to the locking position (PB),
wherein the electric actuator (31) comprises:
- an electric motor (311) comprising an axle (311e); and
- a cam (312) connected to the axle (311e) of the electric motor (311), the cam (312) comprising a contact surface (312c) with the unlocking pushbutton (24) configured such that: in a first rotational position of the motor (311), the contact surface (312c) pushes the unlocking pushbutton (24); and in a second rotational position of the motor (311), the contact surface (312c) does not push the locking pushbutton (24),
and further wherein the axle (311e) of the electric motor (311) is parallel to a longitudinal axis of the rod (21), where the contact surface (312c) of the cam (312) is shaped as a helical ramp,
**characterized in that** the position sensor (32) is comprised in the actuation block (3).

2. System (1) according to claim 1, where the predefined position is a maximum compression position or a maximum extension position of the telescopic mechanism (2).

3. System (1) according to claim 2, comprising a plurality of additional predefined positions between the maximum compression position and the maximum extension position of the telescopic mechanism (2).

4. System (1) according to claim 1, where the position sensor (32) comprises an infrared emitter configured to emit an infrared beam (L) in the longitudinal direction along a space between the outer tube (22) and the rod (21) that impinges onto the plunger of the rod (21).

5. System according to claim 4, where the actuation block (3) comprises a housing (33, 34) having an upper hole (33a) through which the infrared beam (L) passes.

6. Electric bicycle comprising a system according to any of the previous claims, where the actuation block (3) is electrically connected to an electric supply battery of the pedal assist motor.

7. Actuation block (3) for a telescopic seatpost system, the actuation block (3) being configured for connection to a lower end (21i) of a rod (21) of a telescopic mechanism (2), said actuation block (3) comprising an electric actuator (31) configured to selectively push an unlocking pushbutton (24) of the telescopic mechanism (2), the electric actuator (31) alternating between a predetermined locking position (PB) where it does not push the unlocking pushbutton (24) and an unlocking position (PD) where it pushes the unlocking pushbutton (24),
wherein the electric actuator (31) comprises:
- an electric motor (311) comprising an axle (311e); and
- a cam (312) connected to the axle (311e) of the electric motor (311), the cam (312) comprising a contact surface (312c) configured to contact the unlocking pushbutton (24) of the telescopic mechanism (2) such that: in a first rotational position of the motor (311), the contact surface (312c) pushes the unlocking pushbutton (24); and in a second rotational position of the motor (311), the contact surface (312c) does not push the locking pushbutton (24),
and further wherein the axle (311e) of the electric motor (311) is parallel to a longitudinal axis of the rod (21), where the contact surface (312c) of the cam (312) is shaped as a helical ramp,
**characterized by** further comprising a position sensor (32) configured to determine a position of an outer tube (22) of the telescopic mechanism (2) with respect to the rod (21).
